## Europäisches Patentamt
## European Patent Office
## Office européen des brevets

(19)

(11) Veröffentlichungsnummer : **0 436 787 B1**

(12) # EUROPÄISCHE PATENTSCHRIFT

(45) Veröffentlichungstag der Patentschrift :
30.12.92 Patentblatt 92/53

(51) Int. Cl.⁵ : **B01J 2/16,** B01J 2/00,
**B01J 8/18,** B01J 8/00

(21) Anmeldenummer : **90120199.6**

(22) Anmeldetag : **22.10.90**

(54) **Fliessbettapparatur zum Herstellen und/oder Weiterbehandeln schüttfähigen Gutes.**

(30) Priorität : **10.01.90 DE 4000572**

(43) Veröffentlichungstag der Anmeldung :
**17.07.91 Patentblatt 91/29**

(45) Bekanntmachung des Hinweises auf die
Patenterteilung :
**30.12.92 Patentblatt 92/53**

(84) Benannte Vertragsstaaten :
**AT BE CH DE DK ES FR GB GR IT LI LU NL SE**

(56) Entgegenhaltungen :
**DE-A- 2 825 039**
**DE-A- 3 027 517**

(73) Patentinhaber : **Hüttlin, Herbert**
**Daimlerstrasse 7**
**W-7853 Steinen (DE)**

(72) Erfinder : **Hüttlin, Herbert**
**Daimlerstrasse 7**
**W-7853 Steinen (DE)**

(74) Vertreter : **Goetz, Rupert, Dipl.-Ing. et al**
**Wuesthoff & Wuesthoff Patent- und**
**Rechtsanwälte Schweigerstrasse 2**
**W-8000 München 90 (DE)**

EP 0 436 787 B1

Jouve, 18, rue Saint-Denis, 75001 PARIS

## Beschreibung

Die Erfindung betrifft eine Fließbettapparatur zum Herstellen und/oder Weiterbehandeln schüttfähigen Gutes aus festen Formlingen, mit

- mindestens einer Prozeßkammer, die mindestens einen Gaseinlaß und mindestens einen Gasauslaß zum Erzeugen eines allgemeinen Gasstroms aufweist,
- mindestens einer hohlen Lanze, die sich in der Prozeßkammer quer zum allgemeinen Gasstrom erstreckt, ein zu einer Mittelebene symmetrisches Profil hat und einen in ihrer Längsrichtung verlaufenden Förderkanal enthält, an den Stoffabgabedüsen angeschlossen sind, und
- mindestens einem Paar Leitflügel, zwischen denen die Lanze angeordnet und von unten nach oben vom allgemeinen Gasstrom umströmt ist.

Bei einer aus der DE 3839723 C1 bekannten Fließbettapparatur dieser Gattung ist die Prozeßkammer der kreisringförmige Innenraum eines Behälters, der in bezug auf eine senkrechte Achse rotationssymmetrisch ist. Die Prozeßkammer enthält einen Kranz Leitflügel, die, in Richtung der Behälterachse betrachtet, einander überlappen, und dem aufwärtsgerichteten Gasstrom einen Drall erteilen. Zwischen den Leitflügeln sind radial zur Behälterachse Lanzen angeordnet, die je mehrere in Strömungsrichtung des Gases angeordnete Stoffabgabedüsen aufweisen. Durch diese Düsen können große Mengen pulverförmiger und/oder flüssiger Substanz je Zeiteinheit in ein oberhalb der Leitflügel sich bildendes Fließbett eingesprüht werden.

Granulatförmiges Gut, das in dieser bekannten Fließbettapparatur hergestellt und/oder weiterbearbeitet worden ist, zeichnet sich durch besonders große Homogenität aus. Beispielsweise läßt sich beim Herstellen von Aufbaugranulaten ein enges Korngrößenspektrum erzielen und beim Coaten ergeben sich Lacküberzüge von besonders gleichmäßiger Dicke.

Solche Gleichmäßigkeit ist jedoch nicht in jedem Fall erwünscht. Beispielsweise werden zum Füllen von Kapseln für pharmazeutische Anwendungen gelegentlich Pellets mit unterschiedlich zusammengesetzten oder verschieden dicken Lacküberzügen benötigt, damit bestimmte Wirkstoffe gezielt in bestimmten Bereichen des menschlichen Magen-Darmtraktes freigesetzt werden. Solche unterschiedlichen Pellets mußten bisher in der bekannten Apparatur chargenweise nacheinander hergestellt werden, wobei längere Betriebsunterbrechungen für das Umstellen der Apparatur auf unterschiedliche Betriebsbedingungen unvermeidlich waren. Bei gegebener Behältergröße der bekannten Apparatur läßt sich die Chargengröße nur in verhältnismäßig engen Grenzen variieren, so daß die Produktion mit einer solchen Fließbettapparatur nicht ohne weiteres an unterschiedliche betriebliche Erfordernisse angepaßt werden kann.

Der Erfindung liegt deshalb die Aufgabe zugrunde, eine Fließbettapparatur zum Herstellen und/oder weiterbehandeln schüttfähigen Gutes aus festen Formlingen derart zu gestalten, daß sie sich auf einfache Weise an unterschiedliche Anforderungen der beschriebenen Art anpassen läßt.

Die Aufgabe ist erfindungsgemäß ausgehend von einer Fließbettapparatur der eingangs beschriebenen Gattung dadurch gelöst, daß

- die Mittelebene der Lanze mindestens annähernd senkrecht angeordnet ist,
- über den Leitflügeln ein Paar Halbschalen angeordnet ist, das zusammen mit den Leitflügeln einen geraden, zur Mittelebene mindestens annähernd symmetrischen Trog bildet, und
- zwischen Gaseinlaß und Gasauslaß ein Druckgefälle herstellbar ist, bei dem sich innerhalb des Troges ein geradliniges Fließbett bildet.

Ein erfindungsgemäßer Trog von gegebener Gesamtlänge kann eine einzige geradlinige Behandlungsstrecke in einem entsprechend langgestreckten Gehäuse bilden oder in mehrere Abschnitte unterteilt sein, die sich in einem gemeinsamen Gehäuse raumsparend nebeneinander anordnen lassen. In jedem Fall kann man entsprechend dem Bedarf in mehr oder weniger langen Abschnitten des Troges gleiche oder unterschiedliche Behandlungsschritte gleichzeitig ablaufen lassen und nicht benötigte Abschnitte stillegen, beispielsweise durch Einfügen von Zwischenwänden. Man kann auch unterschiedliche, beispielsweise nebeneinander angeordnete Abschnitte des Troges von vorneherein mit unterschiedlichen Ausgangsstoffen, beispielsweise Pellets, Kristalle, Granulate oder Tabletten unterschiedlicher Zusammensetzung und-/oder Größe, beschicken, um schließlich ein Endprodukt mit einer bestimmten Mischung unterschiedlicher Teilchen zu erhalten.

Vorteilhafte Weiterbildungen der Erfindung ergeben sich aus den Unteransprüchen.

Ausführungsbeispiele erfindungsgemäßer Fließbettapparaturen werden im folgenden anhand schematischer Zeichnungen mit weiteren Einzelheiten erläutert. Es zeigen:

Fig. 1 einen Längsschnitt in der senkrechten Ebene I-I in Fig. 3 durch eine Apparatur zum Lackieren und Trocknen vorgefertigter Formlinge,

Fig. 2 einen vergrößerten Ausschnitt aus Fig. 1,

Fig. 3 den senkrechten Querschnitt III-III in Fig. 1,

Fig. 4 die Draufsicht in Richtung des Pfeils IV in Fig. 1,

Fig. 5 die Draufsicht einer Apparatur zum Extrudieren, Lackieren und Trocknen von Formlingen,

Fig. 6 den Längsschnitt VI-VI in Fig. 5,

Fig. 7 den Querschnitt VII-VII in Fig. 5,

Fig. 8 einen stark vergrößerten Ausschnitt aus Fig. 7 und

Fig. 9 die zugehörige, teilweise als Schnitt IX-IX in Fig. 8 gezeichnete Seitenansicht.

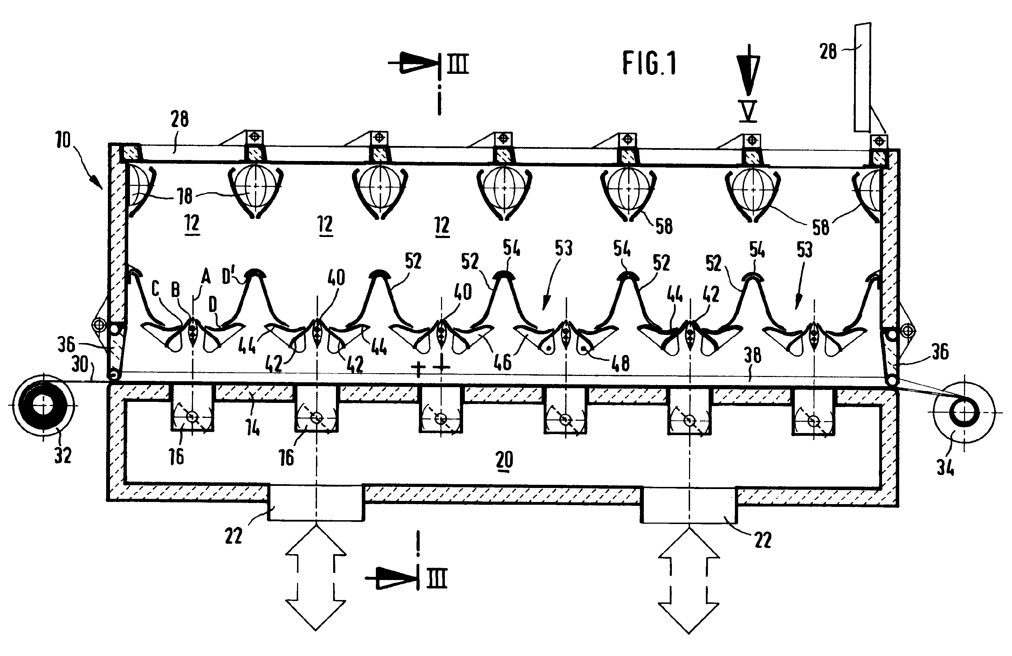

Die in Fig. 1 bis 4 dargestellte Fließbettapparatur hat ein Gehäuse 10, das einen in waagerechter Richtung langgestreckten Quader bildet und wärmeisolierte Wände hat. Innerhalb des Gehäuses 10 sind sechs Prozeßkammern 12 ausgebildet, die einen gemeinsamen Boden 14, je zwei im Boden angeordnete Gaseinlässe 16 sowie Gasauslässe 18 aufweisen, von denen fünf je zwei benachbarten Prozeßkammern 12 gemeinsam zugeordnet sind.

Die Gaseinlässe 16 verbinden die Prozeßkammern 12 mit einer unter dem Boden 14 angeordneten gemeinsamen Zuluftkammer 20, die über Anschlüsse 22 mit entfeuchteter Warmluft oder einem anderen Prozeßgas zu versorgen ist. Die Gasauslässe 18 münden in Abluftkammern 24, die an den Längsseiten des Gehäuses 10 angeordnet sind und sich bis unter den Boden 14 erstrecken, wo sie über Anschlüsse 26 an die Saugseite eines üblichen Gebläses anschließbar sind. Nach oben hin ist jede der Prozeßkammern 12 im Betrieb mit einem Deckel 28 verschlossen, der beispielsweise aus Glas besteht und für Reinigungszwecke hochschwenkbar ist.

Auf dem Boden 14 aufliegend erstreckt sich durch das gesamte Gehäuse 10 in dessen Längsrichtung ein gasdurchlässiges Förderband 30, beispielsweise ein bekanntes Gliederband aus Metall- oder Kunststoffdrahtwendeln. Das Förderband 30 läßt sich von einer Abwickelhaspel 32 abziehen und nach Gebrauch auf eine Aufwickelhaspel 34 aufwickeln. Anstelle dieser beiden Haspeln 32 und 34 können Umlenkrollen vorgesehen sein, die von einem endlosen Förderband umschlungen werden. Die Stirnseiten, an denen das Förderband 30 in das Gehäuse 10 ein- und aus ihm austritt, sind normalerweise mit je einer Klappe 36 verschlossen.

Zum Entleeren der Prozeßkammern 12 ist vorgesehen, daß auf einen Abschnitt des Förderbandes 30, der etwas länger als das Gehäuse 10 ist, eine Folie 38 aufgelegt wird, die anschließend durch Bewegen des Förderbandes 30 in das Gehäuse 10 hineingebracht, mit einem in den Prozeßkammern 12 hergestellten oder behandelten Gut beladen und zusammen mit diesem durch erneutes Bewegen des Förderbandes 30 aus dem Gehäuse 10 herausgefahren wird. Die Folie 38 ist, wie in Fig. 1 angedeutet, an seitlichen Begrenzungen der Prozeßkammern 12 so weit nach oben gezogen, daß eine Kontamination des Förderbandes 30 mit dem hergestellten und/oder behandelten Gut verhindert wird.

Sämtliche Einbauten, die im folgenden beschrieben werden, sind symmetrisch in bezug auf eine senkrechte Mittelebene A der zugehörigen Prozeßkammer 12, die quer zur Längsrichtung des Gehäuses 10 angeordnet ist. In der Mittelebene A erstreckt sich waagerecht in einem Abstand über dem Boden 14 eine Lanze 40 durch jede Prozeßkammer 12 hindurch. Jede der Lanzen 40 hat ein zur Mittelebene A symmetrisches, tropfenförmiges Profil, das unten abgerundet und oben spitz ist. Auf beiden Seiten dieses Profils sind je zwei Leitflügel 42 und 44 parallel zur zugehörigen Lanze 40 angeordnet.

Die beiden Leitflügel 42 und 44 auf der einen und der anderen Seite jeder Lanze 40 sind miteinander durch Platten 46 verbunden, die sich in je einer senkrechten Längsebene erstrecken und auf einer parallel zur Lanze 40 angeordneten Welle 48 befestigt sind. Die Wellen 48 sind mit je einem Schwenkantrieb 50 verbunden, beispielsweise mit einem hydraulischen oder pneumatischen Drehflügelmotor, mit dem die zugehörigen Leitflügel 42 und 44 in einem Winkelbereich von beispielsweise 30° hin- und herschwenkbar sind.

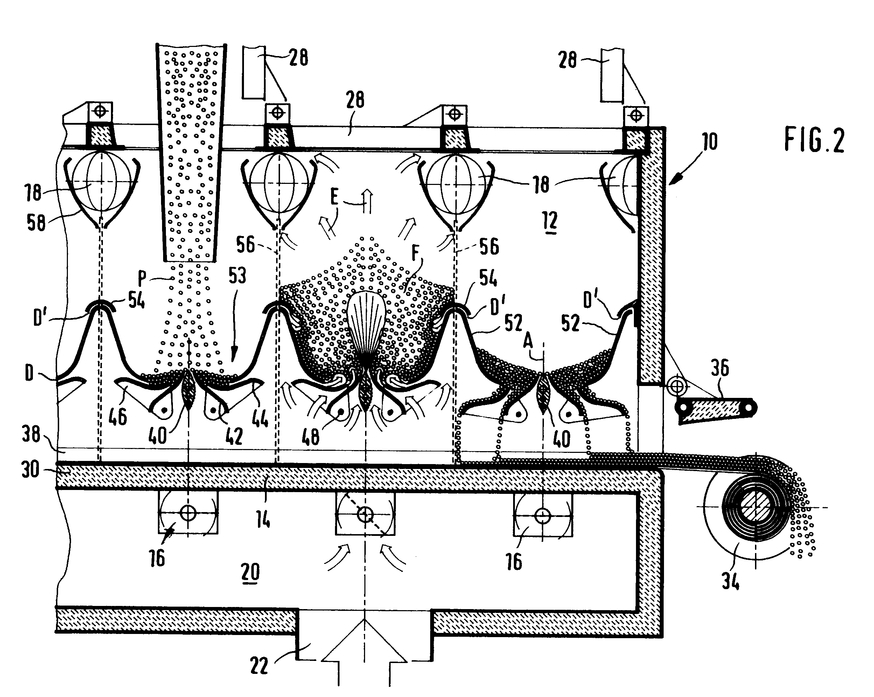

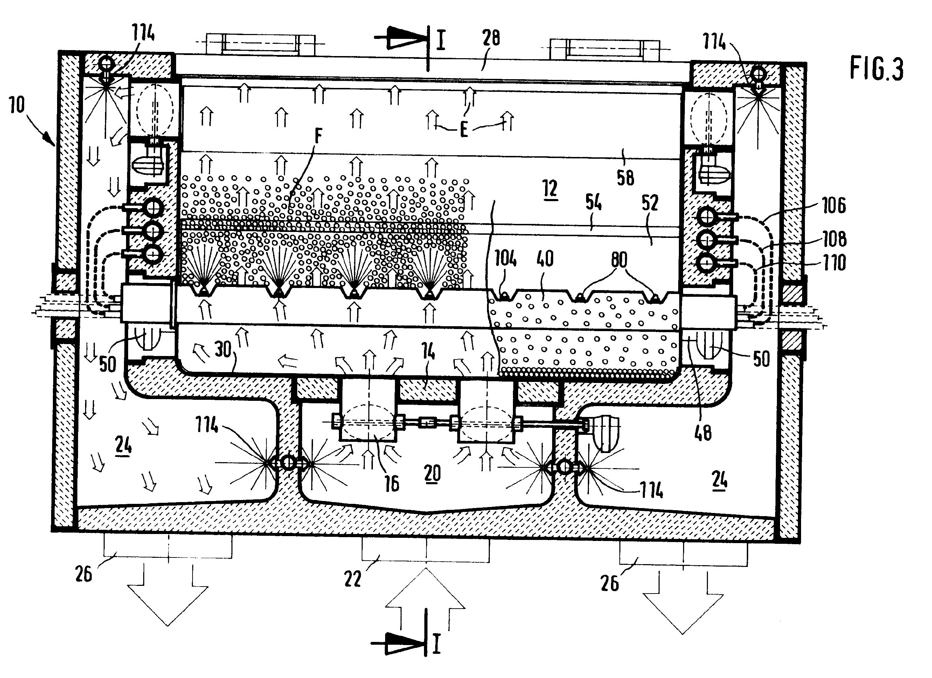

Beiderseits jeder Lanze 40, ebenfalls parallel zu ihr, ist je eine Halbschale 52 angeordnet. Die Halbschalen 52 bilden zusammen mit den zugehörigen Leitflügeln 42 und 44 und der Lanze 40 einen Trog 53, der in der Betriebsstellung der Leitflügel - sh. in Fig. 2 die zweite und dritte Prozeßkammer 12 von rechts - nach unten nahezu geschlossen ist, jedoch beiderseits der Lanze 40 je drei Spalte B, C und D freiläßt, die sich über die gesamte Breite der Prozeßkammer 12 erstrecken. Durch die Spalte B, C und D kann, ausgehend von den zugehörigen Gaseinlässen 16, Prozeßluft in Form eines allgemeinen Gasstromes E (sh. Fig. 2 und 3) um das Profil der Lanze 40 herum nach oben strömen und ein vom Trog 53 umgrenztes Fließbett F bilden (sh. in Fig. 2 die zweite Kammer von rechts und Fig. 3).

Aus der Betriebsstellung lassen sich die Leitflügel 42 und 44 mittels des Schwenkantriebs 50 in eine Entleerungsstellung - sh. in Fig. 2 die erste Kammer von rechts - schwenken, in der das Gut, das sich nach dem Abstellen des Luftstroms im Trog 53 gesammelt hat, durch die Spalte B, C und D nach unten auf die Folie 38 rieseln kann.

Die oberen Ränder der Halbschalen 52 in benachbarten Prozeßkammern 12 lassen zwischen sich einen Zwischenraum frei, der durch ein von unten her gesehen konkaves Deckprofil 54 überdeckt ist. Zwischen dem oberen Rand jeder Halbschale 52 und dem zugehörigen Deckprofil 54 bleibt ein Spalt D′ frei, durch den ein weiterer Teil des allgemeinen Gasstroms E von oben nach unten in den betreffenden Trog 53 einströmt. Die Deckprofile 54 sind so angeordnet, daß das Gut über sie hinwegströmen kann, wenn es in einem der Tröge 53 eine bestimmte Höhe überschreitet. Alternativ können benachbarte Tröge 53 durch eine Zwischenwand 56 voneinander getrennt sein. Die weiter oben angeordneten Gasauslässe 18 sind durch Prallbleche 58 derart abgedeckt, daß höchstens staubartige Partikel des Guts in die Abluftkammern 24 gelangen, wo sie in üblicher Weise aus dem Gasstrom herausgefiltert werden können.

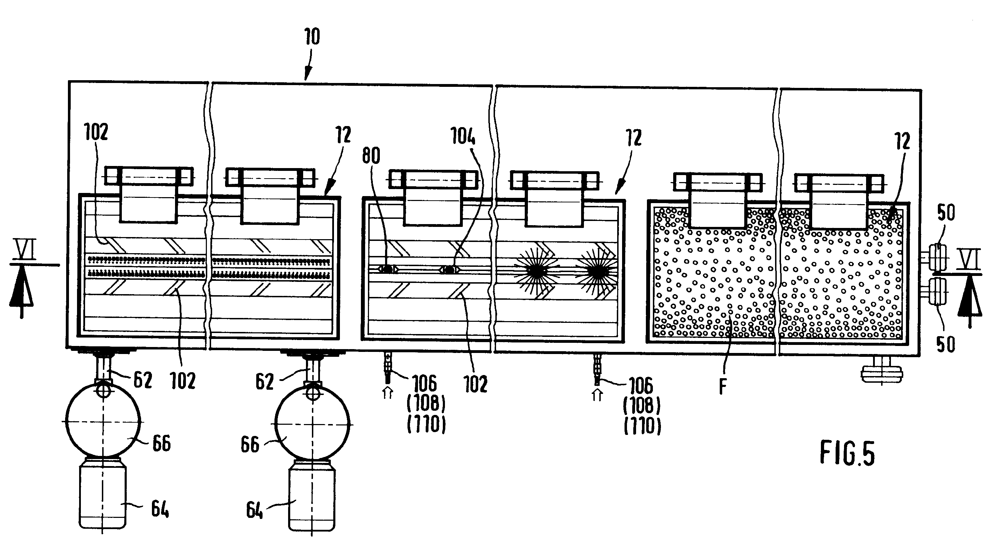

Die in Fig. 1 bis 4 dargestellte Apparatur ist in allen ihren Prozeßkammern 12 dazu ausgerüstet, vorgefertigte Formlinge P, beispielsweise Pellets oder Tabletten, die von oben her in jeden einzelnen Trog 53 geschüttet werden, in fluidisiertem Zustand zu lackieren und zu trocknen. Bei der Apparatur gemäß Fig. 5 bis 9 besteht hingegen die Möglichkeit, Partikel aus teigiger Masse erst zu extrudieren, sie dann zu lackieren und schließlich zu trocknen. Da der Einsatzbereich der in Fig. 5 bis 9 dargestellten Apparatur somit auf einer früheren Stufe des Herstellungsprozesses beginnt, werden Einzelheiten dieser Apparatur im folgenden beschrieben, ehe auf weitere Gemeinsamkeiten beider Apparaturen eingegangen wird.

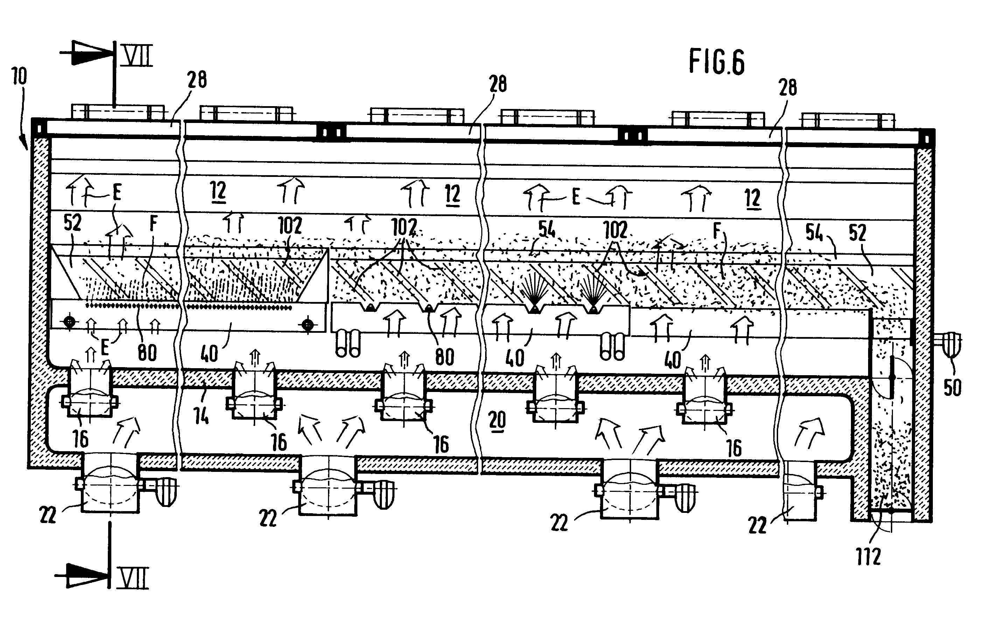

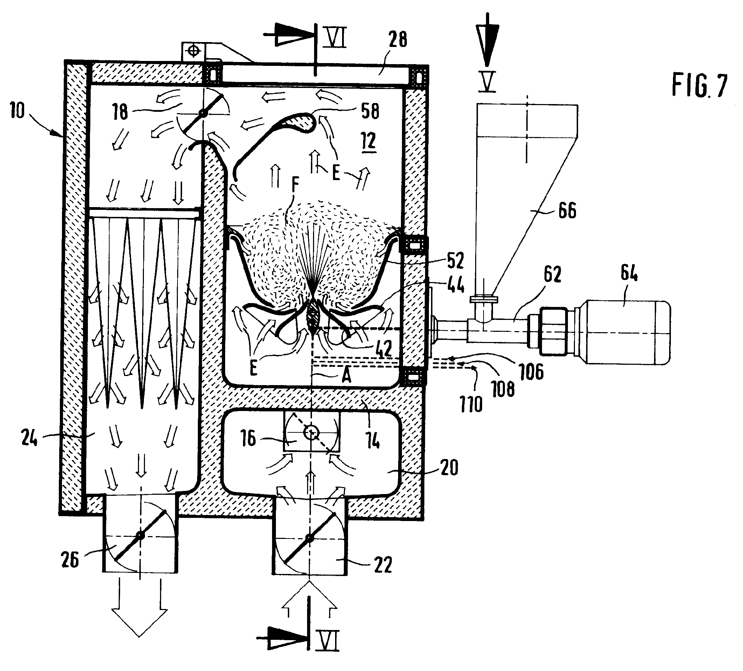

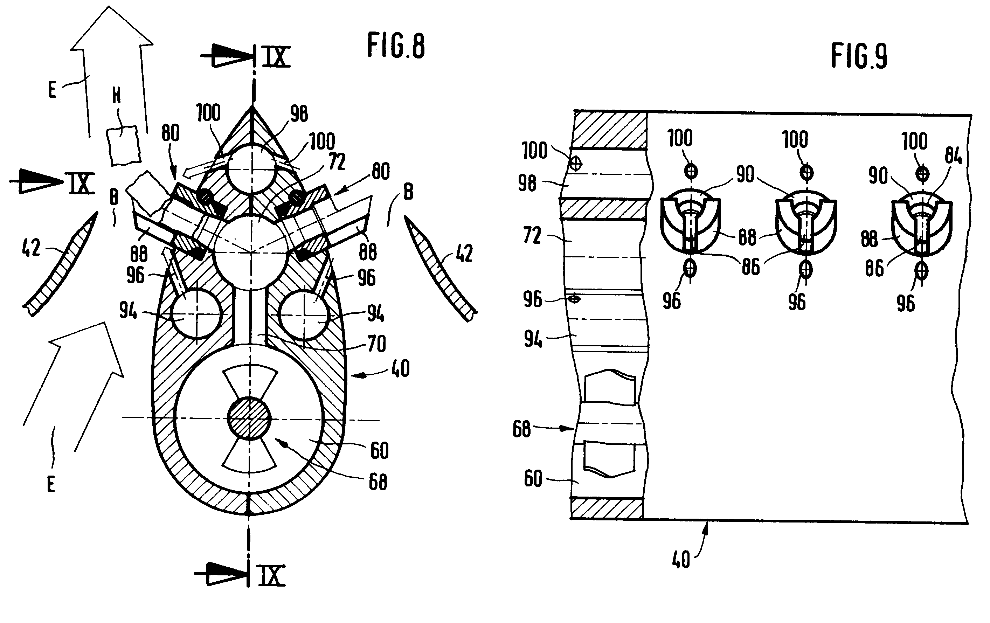

Gemäß Fig. 5 bis 7 sind drei langgestreckte Prozeßkammern 12, die den in Fig. 1 bis 4 dargestellten entsprechen, hintereinander im Gehäuse 12 angeordnet. Von diesen drei Prozeßkammern 12 dient die in Fig. 5 und 6 linke zum Extrudieren, die mittlere zum Lackieren und die rechte zum Trocknen. Durch diese drei Prozeßkammern 12 erstreckt sich eine einzige Lanze 40, die in drei miteinander fluchtende Abschnitte, einen für jede Prozeßkammer 12, unterteilt ist. Alle Abschnitte der Lanze 40 haben auf ihrer gesamten Länge das in Fig. 7 abgebildete äußere Profil, aber nur der Abschnitt in der linken Prozeßkammer 12 ist in allen Einzelheiten so ausgestaltet, wie er in Fig. 8 und 9 dargestellt ist und im folgenden beschrieben wird.

Der Abschnitt der Lanze 40 in der ersten, in Fig. 5 und 6 linken Prozeßkammer 12 hat einen in Längsrichtung verlaufenden Förderkanal 60 von kreisförmigem Querschnitt, der gleichachsig mit dem ebenfalls kreisbogenförmigen unteren Teil des Lanzenprofils angeordnet ist und sich annähernd über die gesamte Länge der ersten Prozeßkammer 12 erstreckt. An die beiden Enden des Förderkanals 60 ist seitlich je eine Pumpe 62 angeschlossen, beispielsweise eine handelsübliche Exzenterschneckenpumpe, die von einem Elektromotor 64 angetrieben wird und eine zu extrudierende teigige Masse aus einem Behälter 66 in den Förderkanal 60 preßt. Der in der ersten Prozeßkammer 12 angeordnete Abschnitt der Lanze 40 enthält in seinem Förderkanal 60 ein Rührwerk 68, das von einem eigenen Elektromotor 69 antreibbar ist und dafür sorgt, daß die Masse im Förderkanal 60 ständig umgerührt wird und nicht erstarrt.

Der Förderkanal 60 ist gemäß Fig. 8 und 9 durch einen Längsschlitz 70 mit einem Verteilkanal 72 verbunden, der sich ebenfalls in Längsrichtung der Lanze 40 erstreckt, und von dem in gleichmäßigen Abständen Bohrungen schräg nach oben zur Oberfläche der Lanze 40 führen. Die Bohrungen haben je eine Schulter, an der sie sich nach außen erweitern, und an der ein Dichtungsring anliegt. In den erweiterten äußeren Bereich der Bohrungen ist je eine als Extrusionsdüse ausgestaltete Stoffabgabedüse 80 bis zur Schulter hin eingeschoben.

Jede der Stoffabgabedüsen 80, die in der ersten Prozeßkammer 12 angeordnet und in Fig. 8 und 9 dargestellt sind, hat einen axial inneren engeren Bereich, der den Durchmesser eines in der Stoffabgabedüse 80 entstehenden Strangs aus teigiger Masse bestimmt, und einen axial äußeren erweiterten Bereich 84, der durch mindestens einen Durchbruch 86 hindurch von außen belüftbar ist, um die Trocknung des Strangs zu fördern. Gemäß Fig. 8 und 9 ist als Durchbruch 86 ein axialer Schlitz vorgesehen, der bezogen auf den allgemeinen Gasstrom E an der Luvseite der Stoffabgabedüse 80 angeordnet ist und sich vom Anfang des erweiterten Bereichs 84 bis zum freien Ende der Stoffabgabedüse 80 erstreckt.

Bei allen in der ersten Prozeßkammer 12 angeordneten Stoffabgabedüsen 80 ist deren in bezug auf den allgemeinen Gasstrom E in Lee liegende Hälfte im axial äußeren Teil des erweiterten Bereichs 84 abgetragen, beispielsweise abgefräst, so daß auf der Luvseite ein halbrohrförmiger Schild 88 übrigbleibt und auf der Leeseite eine Abrißkante 90 gebildet ist. In der Lanze 40 in der ersten Prozeßkammer 12 sind gemäß Fig. 8 zwei Riegel angeordnet, die sich auf je einer Seite der Mittelebene A in Längsrichtung der Lanze 40 erstrecken und die in der betreffenden Hälfte der Lanze 40 eingeschobenen Stoffabgabedüsen 80 gegen axiale Verschiebung sowie gegen Drehen sichern.

Der in der ersten Prozeßkammer 12 angeordnete Abschnitt der Lanze 40 enthält ferner zwei zum Förderkanal 60 parallele untere Druckgaskanäle 94, von denen Druckgasdüsen 96 derart ausgehen, daß auf den oder einen Durchbruch 86 jeder Stoffabgabedüse 80 eine Druckgasdüse 96 gerichtet ist. Die Druckgaskanäle 94 werden über Elektromagnetventile bekannter Bauart intermittierend mit Druckluft versorgt, die getrocknet und vorgewärmt sein kann. Somit geben die unteren Druckgasdüsen 96 stoßweise Druckluft auf den Mündungsbereich der zugehörigen Stoffabgabedüse 80 ab. Die Druckluft wirkt in einem scharf gebündelten Strahl durch den bzw. einen Durchbruch in der zugehörigen Stoffabgabedüse 80 stoßweise auf den Strang ein, so daß von diesem bei jedem Druckluftstoß ein Extrudatteilchen H abbricht.

Im oberen Bereich des in der ersten Prozeßkammer 12 angeordneten Abschnitts der Lanze 40 ist, ebenfalls parallel zum Förderkanal 60, ein weiterer Druckgaskanal 98 angeordnet, der kontinuierlich mit warmer, trockener Druckluft versorgt wird. Vom oberen Druckgaskanal 98 gehen Druckgasdüsen 100 aus, die von oben her unter einem spitzen Winkel gegen den Mündungsbereich je einer Stoffabgabedüse 80 gerichtet sind. Das sich darin bildende Extrudatteilchen H wird somit von einem Warmluftstrahl getrocknet und durch dessen Druck daran gehindert, vorzeitig abzubrechen, ehe sein freies Ende das Ende des Schildes 88 erreicht hat.

Die abgebrochenen Extrudatteilchen H werden in der ersten Prozeßkammer 12 vom allgemeinen Gasstrom E nach oben getragen, wobei sich innerhalb des von den Halbschalen 52 und Leitflügeln 42 und 44 gebildeten Troges 53 ein Fließbett F oder Wirbelbett bildet, in dem die Extrudatteilchen H weiter getrocknet werden. Dieses Fließbett F bewegt sich beiderseits der Lanze 40 langsam aber stetig vorwärts, in Fig. 5 und 6 nach rechts, da die Teilströme des allgemeinen Gasstroms E, die durch die Spalte B, C und D hindurchtreten, eine vorwärtsgerichtete Strömungskomponente haben. Diese Strömungskomponente entsteht dadurch, daß die Leitflügel 42 und 44 sowie in die Halbschalen 52 nach oben vorspringende Sicken oder Rippen 102 aufweisen, die beiderseits der Lanze 40 nach links ansteigen und somit in der Draufsicht gemäß Fig. 5 ein Fischgrätmuster mit Pfeilrichtung nach rechts bilden.

In der mittleren Prozeßkammer 12 der in Fig. 5 bis 9 abgebildeten Apparatur haben die Leitflügel 42 und 44 sowie die Halbschalen 52 die gleiche Form und das gleiche Fischgrätmuster wie in der ersten Prozeßkammer 12. Der Abschnitt der Lanze 40, der sich durch die mittlere Prozeßkammer 12 erstreckt, ist nur noch zum Besprühen der Extrudatteilchen H ausgebildet und zu diesem Zweck mit Stoffabgabedüsen 80 in Form von Mehrstoffdüsen bestückt. Diese Stoffabgabedüsen 80 sind in je einer Vertiefung 104 am oberen Rand des Lanzenprofils angeordnet und in der Mittelebene A senkrecht nach oben gerichtet. Der zugehörige mittlere Abschnitt der Lanze 40 ist an eine Flüssigkeitsleitung 106, eine Feuchtluftleitung 108 und eine Trockenluftleitung 110 angeschlossen. Die von diesen Leitungen gespeisten Stoffabgabedüsen 80 erzeugen einen Lacknebel, z.B. aus einer wäßrigen oder organischen Lösung, Suspension oder Dispersion, so daß die im Fließbett F stetig weiter vorwärts wandernden Extrudatteilchen H lackiert werden. Geeignete Mehrstoffdüsen sind aus der DE 3806537 A1, bes. Fig. 5 bis 7, bekannt.

In der dritten, in Fig. 5 und 6 rechten Prozeßkammer 12 werden die lackierten Extrudatteilchen H nur noch getrocknet, während sie weiterhin stetig vorwärtswandern. Zum Trocknen kann das Fließbett F genügen, das von dem allgemeinen Gasstrom E im Trog 53 erzeugt wird. Die Lanze 40 kann aber auch in der dritten Prozeßkammer 12 mit Düsen bestückt sein, durch die beispielsweise zusätzlich Warmluft in das Fließbett F eingeleitet wird, um die Trocknung zu fördern. Am Ende der dritten Prozeßkammer 12 fallen die lackierten und getrockneten Extrudatteilchen H in einen Abwurfschacht 112.

Die Prozeßkammern 12 sind bei hochgeklappten Deckeln 28 zum Reinigen gut zugänglich. In der Zuluftkammer 20 sowie in den Abluftkammern 24 sind Düsen 114 angeordnet, durch die eine Flüssigkeit zum Reinigen eingesprüht werden kann. Dies gilt für beide dargestellten Apparaturen.

Die in Fig. 1 bis 4 dargestellte Apparatur arbeitet chargenweise. Die Lanzen 40 in allen Prozeßkammern 12 sind mit Stoffabgabedüsen 80 in Form von Mehrstoffdüsen der aus der DE 3806537 A1 bekannten Art bestückt. Sie sind gemäß Fig. 3 an ihren beiden Enden an je eine Flüssigkeitsleitung 106 sowie je eine Feuchtluftleitung 108 und je eine Trockenluftleitung 110 angeschlossen.

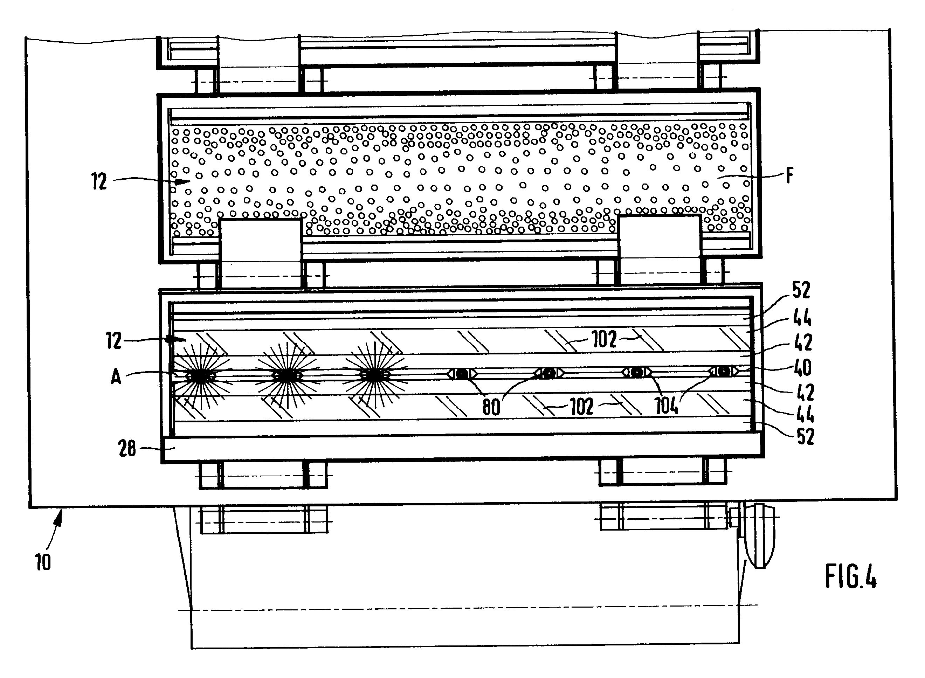

Die Leitflügel 42 und 44 und/oder die Halbschalen 52 weisen gemäß Fig. 4 wiederum schräge Sicken oder Rippen 102 auf, die jedoch von oben betrachtet auf beiden Seiten der Lanze 40 die gleiche Neigung haben. Solche Rippen 102 geben dem allgemeinen Gasstrom E eine schräge Richtung, so daß das Fließbett F auf den beiden Seiten der Lanze 40 in entgegengesetzten Richtungen längs der Lanze wandert und die Extrudatteilchen H infolgedessen besonders gut durchmischt werden.

## Patentansprüche

1. Fließbettapparatur zum Herstellen und/oder Weiterbehandeln schüttfähigen Gutes aus festen Formlingen, mit
   - mindestens einer Prozeßkammer (12), die mindestens einen Gaseinlaß (16) und mindestens einen Gasauslaß (18) zum Erzeugen eines allgemeinen Gasstroms (E) aufweist,
   - mindestens einer hohlen Lanze (40), die sich in der Prozeßkammer (12) quer zum allgemeinen Gasstrom (E) erstreckt, ein zu einer Mittelebene (A) symmetrisches Profil hat und einen in ihrer Längsrichtung verlaufenden Förderkanal (60) enthält, an den Stoffabgabedüsen (80) angeschlossen sind, und
   - mindestens einem Paar Leitflügel (42, 44), zwischen denen die Lanze (40) angeordnet und von unten nach oben vom allgemeinen Gasstrom (E) umströmt ist,
   dadurch **gekennzeichnet**, daß
   - die Mittelebene (A) der Lanze (40) mindestens annähernd senkrecht angeordnet ist,
   - über den Leitflügeln (42, 44) ein Paar Halbschalen (52) angeordnet ist, das zusammen mit den Leitflügeln (42, 44) einen geraden, zur Mittelebene (A) mindestens annähernd symmetrischen Trog (53) bildet und
   - zwischen Gaseinlaß (16) und Gasauslaß (18) ein Druckgefälle herstellbar ist, bei dem sich innerhalb des Troges (53) ein geradliniges Fließbett (F) bildet.

2. Fließbettapparatur nach Anspruch 1, dadurch **gekennzeichnet**, daß zwischen jeder Halbschale (52) und dem benachbarten Leitflügel (44) ein Spalt (D) freigelassen ist, durch den ein Teil des allgemeinen Gasstroms (E) auf die Stoffabgabedüsen (80) gerichtet ist.

3. Fließbettapparatur nach Anspruch 1 oder 2, dadurch **gekennzeichnet**, daß beiderseits der Lanze (40) je zwei Leitflügel (42, 44) angeordnet sind, zwischen denen ein Spalt (C) freigelassen ist, durch den ein Teil des allgemeinen Gasstroms (E) auf die Stoffabgabedüsen (80) gerichtet ist.

4. Fließbettapparatur nach einem der Ansprüche 1 bis 3,
dadurch **gekennzeichnet**, daß jede Halbschale (52) in einem oberen Randbereich zusammen mit einem Deckprofil (54) einen Spalt (D') bildet, durch den ein Teil des allgemeinen Gasstroms (E) innerhalb der Halbschale (52) nach unten gerichtet ist.

5. Fließbettapparatur nach einem der Ansprüche 1 bis 4,
dadurch **gekennzeichnet**, daß zwei oder mehr Prozeßkammern (12), die je einen Trog (53) enthalten, in einem gemeinsamen Gehäuse (10) nebeneinander angeordnet sind.

6. Fließbettapparatur nach Anspruch 5,
dadurch **gekennzeichnet**, daß obere Randbereiche aneinandergrenzender Halbschalen (52) benachbarter Tröge (53) von in einem Trog (53) überschüssigem Gut in Richtung zum benachbarten Trog (53) hin überströmbar sind.

7. Fließbettapparatur nach Anspruch 6,
dadurch **gekennzeichnet**, daß die aneinandergrenzenden oberen Randbereiche von Halbschalen (52) benachbarter Tröge (53) von einem gemeinsamen Deckprofil (54) überdeckt sind, das mit beiden Halbschalen (52) je einen Spalt (D') bildet, durch den ein Teil des allgemeinen Gasstroms (E) nach unten gerichtet ist.

8. Fließbettapparatur nach einem der Ansprüche 5 bis 7,
dadurch **gekennzeichnet**, daß sich durch die Prozeßkammern (12) unterhalb der Tröge (53) ein Förderband (30) erstreckt, mit dem sich behandeltes Gut aus dem Gehäuse (10) austragen läßt.

9. Fließbettapparatur nach einem der Ansprüche 5 bis 8,
dadurch **gekennzeichnet**, daß die Leitflügel (42, 44) und/oder die Halbschalen (52) schräge Sicken oder Rippen (102) aufweisen, die von oben betrachtet auf beiden Seiten der Lanze (40) gleichgerichtet sind.

10. Fließbettapparatur nach einem der Ansprüche 1 bis 4,
dadurch **gekennzeichnet**, daß mehrere Prozeßkammern (12) in einem gemeinsamen Gehäuse (10) hintereinander angeordnet sind und je einen Abschnitt einer gemeinsamen Lanze (40) sowie eines gemeinsamen Troges (53) enthalten.

11. Fließbettapparatur nach Anspruch 10,
dadurch **gekennzeichnet**, daß die Lanze (40) in den einzelnen Prozeßkammern (12) mit unterschiedlichen Stoffabgabedüsen (80) ausgestattet ist.

12. Fließbettapparatur nach Anspruch 10 oder 11,
dadurch **gekennzeichnet**, daß die Leitflügel (42, 44) und/oder die Halbschalen (52) schräge Sicken oder Rippen (102) aufweisen, die von oben betrachtet auf beiden Seiten der Lanze (40) fischgrätenartig konvergieren.

## Claims

1. A fluidized bed apparatus for making and/or processing pourable material of solid molded parts, comprising
   - at least one treatment chamber (12) which includes at least one gas inlet (16) and at least one gas outlet (18) to produce a general flow of gas (E),
   - at least one hollow lance (40) extending transversely of the general flow of gas (E) in the treatment chamber (12), having an outline which is symmetrical with respect to a center plane (A), and including a conveyor channel (60) which extends in longitudinal direction of the lance and to which discharge nozzles (80) for material are connected, and
   - at least one pair of guide vanes (42,44) between which the lance (40) is arranged for the general flow of gas (E) to flow around it from the bottom to the top,
   **characterized** in that
   - the center plane (A) of the lance (40) is located at least approximately vertically,
   - a pair of semishells (52) are disposed above the guide vanes (42, 44) forming, together with the guide vanes (42,44), a straight trough (53) which is at least approximately symmetrical with respect to the center plane (A), and
   - a pressure gradient can be produced between the gas inlet (16) and the gas outlet (18) at which gradient a rectilinear fluidized bed (F) is formed within the trough (53).

2. The fluidized bed apparatus as claimed in claim 1, characterized in that a gap (D) is left open between each semishell (52) and the adjacent guide vane (44) and part of the general gas flow (E) is directed through the same toward the discharge nozzles (80) for material.

3. The fluidized bed apparatus as claimed in claim 1 or 2, characterized in that two guide vanes (42,44) each are arranged at either side of the lance (40) with a gap (C) being left open between them through which part of the general gas flow (E) is directed toward the discharge nozzles (80) for material.

4. The fluidized bed apparatus as claimed in one of claims 1 to 3, characterized in that in an upper edge region each semishell (52) forms a gap (D') together with a shaped cover (54) through which gap part of the general flow of gas (E) in the semishell (52) is directed downwards.

5. The fluidized bed apparatus as claimed in one of claims 1 to 4, characterized in that two or more treatment chambers (12), each containing a trough (53) are arranged side by side in a common housing (10).

6. The fluidized bed apparatus as claimed in claim 5, characterized in that upper edge regions of semishells (52) bordering on each other of adjacent troughs (53) are adapted for excess material from one trough (53) to flow across toward the adjacent trough (53).

7. The fluidized bed apparatus as claimed in claim 6, characterized in that the upper edge regions bordering on each other of semishells (52) of adjacent troughs (53) are covered by a common shaped cover (54) forming a gap (D') each with the two semishells (52) through which part of the general flow of gas (E) is directed downwards.

8. The fluidized bed apparatus as claimed in one of claims 5 to 7, characterized in that a conveyor belt (30) extends through the treatment chambers (12) below the troughs (53) to permit removal of treated material from the housing (10).

9. The fluidized bed apparatus as claimed in one of claims 5 to 8, characterized in that the guide vanes (42,44) and/or the semishells (52) are formed with oblique corrugations or fins (102) extending in the same direction at both sides of the lance (40), when looked at from above.

10. The fluidized bed apparatus as claimed in one of claims 1 to 4, characterized in that a plurality of treatment chambers (12) are arranged one behind the other in a common housing (10), each containing a portion of a common lance (40) and a portion of a common trough (53).

11. The fluidized bed apparatus as claimed in claim 10, characterized in that the lance (40) is furnished with different discharge nozzles (80) for material in the individual treatment chambers (12).

12. The fluidized bed apparatus as claimed in claim 10 or 11, characterized in that the guide vanes (42,44) and/or the semishells (52) are formed with oblique corrugations or fins (102) which converge in herringbone pattern at both sides of the lance (40), when looked at from above.

**Revendications**

1. Appareil à lit fluidisé pour la préparation et/ou le traitement de matières en vrac de briquettes d'aggloméré, avec:
   - au moins une enceinte de traitement (12), présentant au moins une entrée de gaz (16) et au moins une sortie de gaz (18), pour créer un écoulement global de gaz (E),
   - au moins une lance creuse (40) s'étendant transversalement au courant général de gaz (E) dans l'enceinte de traitement (12), possédant un profil symétrique par rapport à un plan médian (A) et contenant un conduit d'alimentation (60) s'étendant dans la direction de sa longueur et auquel sont raccordés des buses d'émission de matière (80), et
   - au moins une paire d'ailettes de guidage (42, 44) entre lesquelles est disposée la lance (40), et qui sont balayées du bas vers le haut par le courant général de gaz (E),
   caractérisé en ce que:
   - le plan médian (A) de la lance est disposé au moins approximativement dans le sens vertical,
   - une paire de demi-coquilles (52) est disposée au-dessus des ailettes de guidage (42, 44) et forme avec les ailettes de guidage (42, 44) une auge (53) droite et au moins approximativement symétrique par rapport au plan médian (A), et
   - une chute de pression, dans laquelle se forme un lit fluidisé (F) rectiligne, peut être réalisée à l'intérieur de l'auge (53) entre l'entrée de gaz (16) et la sortie de gaz (18).

2. Appareil à lit fluidisé selon la revendication 1, caractérisé en ce qu'entre chaque demi-coquille (52) et l'ailette de guidage (44) voisine est maintenu libre un interstice (D) grâce auquel une partie de l'écoulement général (E) est dirigé sur les buses d'émission de matières (80).

3. Appareil à lit fluidisé selon la revendication 1 ou 2, caractérisé en ce que de chacun des deux côtés de la lance (40) sont disposées deux ailettes de guidage (42, 44) entre lesquelles est laissé libre un interstice (C) à travers lequel une partie de l'écoulement général (E) est dirigée sur les buses d'émission de matières (80).

4. Appareil à lit fluidisé selon l'une des revendications 1 à 3, caractérisé en ce que dans sa bordure supérieure chaque demi-coquille (52) forme avec un profilé de recouvrement (54) un interstice (D') à travers lequel une partie de l'écoulement général de gaz (E) traversant la demi-coquille (52) est dirigé vers le bas.

5. Appareil à lit fluidisé selon l'une des revendications 1 à 4, caractérisé en ce que deux ou plusieurs enceinte de traitement ( 12) contenant chacune une auge (53) sont disposées les unes à côtés des autres dans un boîtier commun (10).

6. Appareil à lit fluidisé selon la revendication 5, caractérisé en ce que les bordures supérieures de demi-coquilles (52) adjacentes d'auges (53) voisines peuvent être traversées par la matière en excès, en direction de l'auge (53) voisine.

7. Appareil à lit fluidisé selon la revendication 5, caractérisé en ce que les bordures supérieures adjacentes des demi-coquilles (52) d'auges (53) voisines sont recouvertes d'un profil de recouvrement (54) commun qui avec chacune des deux demi-coquilles (52) forme un interstice (D') à travers lequel une partie de l'écoulement général de gaz (E) est dirigée vers le bas.

8. Appareil à lit fluidisé selon l'une des revendications 5 à 7, caractérisé en ce qu'une bande transporteuse traverse les enceintes de traitement (12) en-dessous des auges (53), cette bande transporteuse permettant l'extraction de la matière traitée hors du boîtier (10).

9. Appareil à lit fluidisé selon l'une des revendications 5 à 8, caractérisé en ce que les ailettes de guidage (42, 44) et/ou les demi-coquilles (52) présentent des moulures ou nervures (102) obliques qui vues du haut sont orientées dans le même sens des deux côtés de la lance (40).

10. Appareil à lit fluidisé selon l'une des revendications 1 à 4, caractérisé en ce que plusieurs enceintes de traitement (12) sont disposées l'une à la suite de l'autre dans un boîtier (12) commun et contiennent chacune une section d'une lance (40) commune ainsi qu'une auge (53) commune.

11. Appareil à lit fluidisé selon la revendication 10, caractérisé en ce que la lance (40) est équipée dans les différentes enceintes de traitement (12) de différentes buses d'émission de matières (80).

12. Appareil à lit fluidisé selon la revendication 10 ou 11 , caractérisé en ce que les ailettes de guidage (42, 44) et/ou les demi-coquilles (52) présentent des moulures ou nervures (102) obliques qui vues du haut convergent en arêtes de poisson vers les deux côtés de la lance (40).

FIG.1

FIG. 2

EP 0 436 787 B1

FIG.3

FIG. 4

FIG.5

FIG.6

FIG.7

EP 0 436 787 B1

FIG.8

FIG.9

EP 0 436 787 B1